# EUROPÄISCHE PATENTSCHRIFT

(11) **EP 4 054 223 B1**
(45) Veröffentlichungstag und Bekanntmachung des Hinweises auf die Patenterteilung: **28.01.2026**
(21) Anmeldenummer: 22020086.9
(22) Anmeldetag: 03.03.2022
(51) Int. Cl.: H04W 12/086, H04W 12/30, H04W 8/18

(54) **TEILNEHMERIDENTITÄTSMODUL MIT ODER EINGERICHTET FÜR APPLIKATION**
SUBSCRIBER IDENTITY MODULE WITH OR SET UP FOR APPLICATION
MODULE D'IDENTITÉ D'ABONNÉ POURVU DE OU CONÇU POUR UNE APPLICATION

(30) Priorität: 04.03.2021 DE 102021001158
(43) Veröffentlichungstag der Anmeldung: 07.09.2022
(73) Patentinhaber: Giesecke+Devrient Mobile Security Germany GmbH, 81677 München (DE)
(72) Erfinder: Dietze, Claus, 82395 Obersöchering (DE); Eichholz, Jan, 80997 München (DE)
(74) Vertreter: Ter Meer Steinmeister & Partner

(56) Entgegenhaltungen:
- EP-A1- 2 942 995
- EP-A1- 3 647 975
- WO-A1-2015/175164
- US-A1- 2015 193 224
- US-A1- 2015 212 753
- US-A1- 2018 234 405
- ANONYMOUS: "GSM Association: SGP.02 Remote Provisioning Architecture for Embedded UICC Technical Specification", INTERNET CITATION, 7 July 2020 (2020-07-07), pages 1 - 452, XP009534881, Retrieved from the Internet <URL:https://www.gsma.com/esim/wp-content/uploads/2020/07/SGP.02-v4.2.pdf>
- ANONYMOUS: "SGP.21 -RSP Architecture", 27 February 2017 (2017-02-27), INTERNET, XP055436762, Retrieved from the Internet <URL:https://www.gsma.com/newsroom/wp-content/uploads/SGP.21_v2.1.pdf> [retrieved on 20171220]
- GSMA: "GSM Association Non-confidential Official Document SGP.22 -SGP.22 RSP Technical Specification Security Classification: Non-confidential GSM Association Non-confidential Official Document SGP.22 -SGP.22 RSP Technical Specification", 5 June 2020 (2020-06-05), pages 1 - 268, XP055978359, Retrieved from the Internet <URL:https://www.gsma.com/esim/wp-content/uploads/2020/06/SGP.22-v2.2.2.pdf> [retrieved on 20221107]

## Beschreibung

### Gebiet der Erfindung

Die Erfindung betrifft Teilnehmeridentitätsmodul zur Authentisierung eines mobilen Endgeräts gegenüber einem mobilen Netzwerk, umfassend mindestens einen Profilcontainer, der dazu eingerichtet ist, dass darin von einem Profilserver aus ein Profil geladen, installiert und verwaltet werden kann, und weiter eingerichtet, dass Applikationen in das Teilnehmeridentitätsmodul geladen und dort installiert und verwaltet werden können, oder enthaltend Applikationen, wobei die Applikation dazu eingerichtet sind, einen Dienst anzubieten, der von einer Authentisierung gegenüber dem Mobilfunknetz unterschiedlich ist.

Die Welt ist mobil vernetzt, und die mobile Vernetzung schreitet weiter. Mobilfunkfähige Endgeräte kommunizieren über Mobilfunknetze. Zu den klassischen mobilfunkfähigen Endgeräten aus dem Consumer-Bereich zählen die Smartphones und Mobiltelefone. Zu mobilfunkfähigen Endgeräten aus dem IoT-Bereich zählen weiter Regelungsgeräte (Steuerungsgeräte oder Messgeräte oder kombinierte Steuer/Messgeräte) für industrielle Einrichtungen im kommerziellen oder im privaten Umfeld. Industrielle Einrichtungen sind beispielsweise Produktionsanlagen, die ein oder mehrere Regelungsgeräte (Endgeräte) haben, die über ein Mobilfunknetz mit einem Hintergrundsystem oder/und miteinander kommunizieren können. Weitere industrielle Einrichtungen sind Smart Home Einrichtung wie z.B. Heizungen oder Stromverbraucher mit Endgeräten in Gestalt von Regelungsgeräten.

Zur Nutzung eines mobilfunkfähigen Endgeräts, wie Smartphones oder Mobiltelefons, in einem Mobilfunknetzwerk eines Netzbetreibers enthält das Endgerät ein Teilnehmeridentitätsmodul mit einem Subskriptions Profil oder kurz Profil. Das Profil bewerkstelligt die Konfiguration des Endgeräts und der Verbindung des Endgeräts im Mobilfunknetz. Das Profil ist durch einen Datensatz gebildet, der den Aufbau, Betrieb und Abbau einer Verbindung des Endgeräts im Mobilfunknetzwerk ermöglicht, und umfasst beispielsweise einen kryptographischen Authentisierungs-Schlüssel Ki und eine International Mobile Subscriber Identity IMSI.

Das Endgerät selbst hat einen oder mehrere Endgerät-Chips zum Betrieb von Funktionen des Endgeräts. Aktuelle Smartphones haben beispielsweise typischerweise zumindest drei Endgeräte-Chips, nämlich einen Transceiver-IC, der die physische Funkkommunikation durchführt, einen Baseband-Prozessor (oder gleichbedeutend Modem), der Funktionen zur Datenübertragung über Funkkommunikation auf Protokollebene durchführt, und einen Application-Prozessor AP, auf welchem das Betriebssystem und Anwendungssoftware ausgeführt werden. Als weitere Endgeräte-Chips können Transceiver-ICs für andere Funkkanäle vorgesehen sein, insbesondere für kurzreichweitige Funkkanäle wie NFC (NFC: near field communication) oder Bluetooth.

Das Teilnehmeridentitätsmodul kann in unterschiedlichen Formfaktoren gestaltet sein, insbesondere Plug-In, Embedded, Integrated und Software. Teilnehmeridentitätsmodule vom Formfaktor Plug-In und Embedded sind auf einem dezidierten, eigenen Chip oder SoC (System-on-Chip) angeordnet. Beispiele für Plug-Ins sind SIM-Karte (SIM = Subscriber Identity Module) oder USIM-Karte (Universal SIM) oder UICC (Universal Integrated Circuit Card) und kontaktieren das Endgerät über einen Kartenleser. Alternativ kann der dezidierte Chip in ein Gehäuse integriert sein, das in das Endgerät festeinlötbar bzw. festeingelötet ist. Ein einlötbares/eingelötetes Teilnehmeridentitätsmodul wird mit dem Zusatz "embedded" versehen und als eUICC bezeichnet, wobei e für embedded steht und die weitere Bezeichnung vom entsprechend ausgestatteten Plug-In übernommen ist. Weitere mögliche Formfaktoren eines Teilnehmeridentitätsmoduls sind integrierte Teilnehmeridentitätsmodule, die auf einem Endgeräte-Chip oder SoC (System-on-Chip) des Endgeräts mit integriert sind, also keinen eigenen Chip besitzen. Integrierte Teilnehmeridentitätsmodule werden mit dem Zusatz "integrated" versehen und z.B. als integrated UICC, iUICC. Weitere mögliche Formfaktoren eines Teilnehmeridentitätsmoduls sind reine Software-Module mit der Funktionalität eines Teilnehmeridentitätsmoduls, die in einen Endgeräte-Chip integriert sind.

Die eUICC gewinnt in Smartphones und IoT-Awendungen zunehmend an Bedeutung. Zusätzlich steigt durch die zunehmende Digitalisierung in allen Bereichen der Bedarf an IT-Sicherheitslösungen mit starker Sicherheit.

Es ist davon auszugehen, dass zukünftig die eUICC, neben der Authentisierung des Netzwerkzugangs zum Mobilfunknetz, verbreitet auch für darüber hinausgehende Dienste (Services) auf Applikationsebene Sicherheitslösungen anbieten wird. Solche Dienste können Identifizierungsdienste (MobileID), Signaturdienste zur Singnatur unterschiedlichster Transaktionsdaten (elektronische Signatur), Ticketing-Dienste, VPN-Zugangs-Dienste (VPN = Virtual Private Network) und viele mehr sein.

Hierbei ist die starke Standardisierung der eUICC hilfreiche dabei, Kompatibilität der eUICCs unterschiedlicher Hersteller zu einem erheblichen (wenn auch nicht vollständigen) Grad sicherzustellen.

Gegenstand der Erfindung ist eine Architektur für ein Teilnehmeridentitätsmodul, die es ermöglicht, Applikationen, insbesondere Applets, für Service-Dienste im Teilnehmeridentitätsmodul zu implementieren und verwalten.

### Stand der Technik

In den GSMA Spezifikationen SGP.22, SGP.02 und SGP.21 sind die Architektur und Verwaltungsmöglichkeiten eines Teilnehmeridentitätsmoduls eUICC beschrieben.

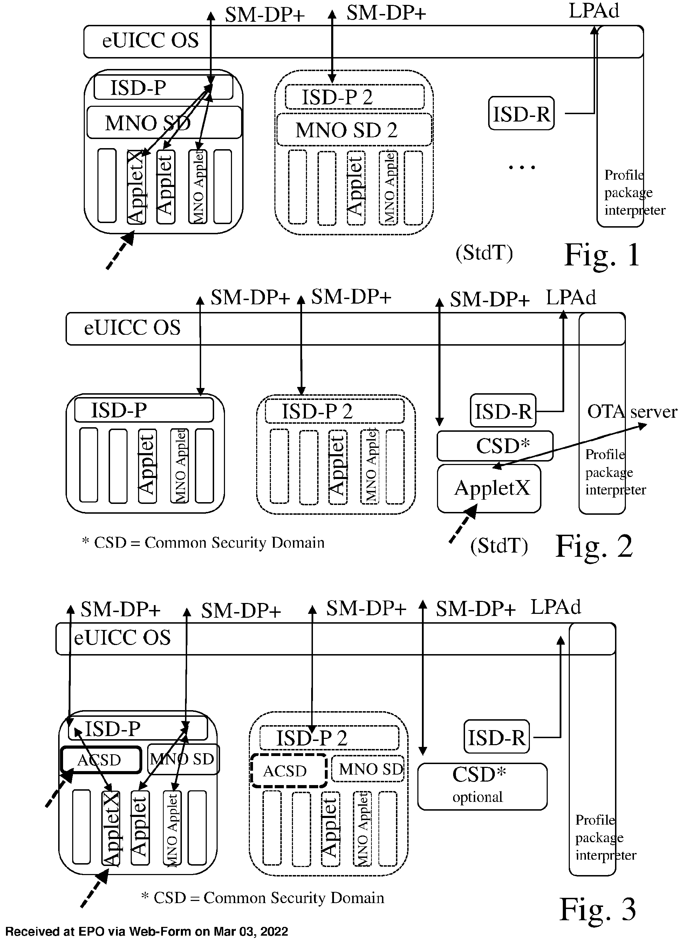

Speziell ist in GSMA SGP.01 RSP Architecture, Version 2.2, 01 September 2017, Kapitel 4.1.1 "eUICC Architecture Overview", Figur 2, die Architektur und Kommunikationskanäle für Verwaltungsmöglichkeiten eines Teilnehmeridentitätsmoduls eUICC gezeigt. Demnach hat ein eUICC eine Mehrzahl von Profilcontainern, die sogenannten ISD-Ps (auch SGP.21, Kapitel 4.1.1.3). In jedem Profilcontainer ISD-P ist ein Subskriptions-Profil oder kurz Profil enthalten, das eine Authentisierung des mobilen Endgeräts gegenüber einem Mobilfunknetz ermöglicht. Jeder Profilcontainer mitsamt seines Inhalts liegt unter der Verfügungsgewalt eines bestimmten Netzbetreibers MNO (Mobile Network Operator; teils auch kurz nur "Operator" genannt). Die Profile werden über den Mechanismus des Remote Sim Provisioning RSP von einem Server - SM-DP+ im Fall von SGP.22 - in das eUICC geladen und im eUICC installiert (SGP.21, Figur 2, Kanal ES6 "to Operator" = Kanal zum MNO (= Operator),; Kanal ES8+ "to SM-DP+" = Kanal zum Subskriptionsserver SM-DP+). Das RSP eines Profilcontainers und seines Inhalts liegt in der Verfügungsgewalt des bestimmten Netzbetreibers MNO.

Zusätzlich, wie ebenfalls in SGP.21, Figur 2, zu sehen ist, können in Profilcontainern ISD-Ps Applets enthalten sein. Als Applets besonders interessant erscheinen für zukünftige eUICCs Applets für zusätzliche Services, die über die Authentisierung im Mobilfunknetz hinausgehen und davon logisch unabhängig sind. Beispiele geeigneter solcher Services sind Mobile ID (mobile Identifizierung von Personen wie mit einem körperlichen Ausweisdokument), Signatur von Transaktionsdaten, Ticketing, VPN-Zugang (VPN = Virtual Private Network).

Applets innerhalb eines Profilcontainers ISD-P können über den RSP Mechanismus in den ISD-P geladen, installiert und dort auch verändert werden. Dabei liegen die Applets, wie jeglicher ISD-P-Inhalt, unter der Verfügungsgewalt des Netzbetreibers MNO, der über den ISD-P verfügt. Die hierdurch geschaffene Abhängigkeit von einem bestimmten Netzbetreiber MNO ist nicht immer wünschenswert.

In manchen Arbeitsgruppen in der GSMA Standardisierung wurde eine alternative eUICC Architektur vorgeschlagen, bei der Applets außerhalb von Profilcontainern im eUICC installiert werden, um ein von Netzbetreibern MNOs unabhängiges Laden, Installieren und Verwalten, auch Ändern, von Applets zu ermöglichen. Nachteilig an dieser Lösung ist, dass für ein Laden, Installieren und Verwalten, auch Ändern, von Applets die geprüften und bewährten GSMA RSP-Mechanismen nicht mehr verwendet werden können. Stattdessen können andere OTA Server (OTA = over the air) zum Einsatz kommen.

Figur 1 zeigt eine eUICC Architektur nach SGP.21 mit der Möglichkeit, Applets im eUICC vorzusehen. Das eUICC aus Figur 1 hat beispielhaft zwei Profilcontainer ISDP, ISD-P 2. Profilcontainer ISD-P enthält drei Applets Applet, und Applet X und MNO Applet. Das eUICC hat weiter für jeden Profilcontainer ISD-P, ISD-P 2 eine eigene MNO Sicherheitsdomäne (MNO Security Domain), auf welcher der Profilcontainer ISD-P, ISD-P 2 aufsetzt. Weiter hat das eUICC ein eUICC Betriebssystem - eUICC OS - auf dem die einzelnen

Profilcontainer ISD-Ps aufsetzen. Das Applet, das dem MNO gehörige Applet und das vom MNO unabhängige Applet X lassen sich über die RSP Architektur verwalten, beispielsweise über die Kanäle vom ISD-P zum SM-DP+, oder über den Kanal vom LPAd zum ISD-R.

Figur 2 zeigt eine eUICC Architektur nach dem in der GSMA diskutierten alternativen Vorschlag zur Unterbringung von Applets im eUICC. Das eUICC hat ebenfalls ein eUICC Betriebssystem - eUICC OS. Auf dem eUICC OS setzt eine gemeinsame Sicherheitsdomäne - Common Security Domain - CSD auf. Auf der gemeinsamen Sicherheitsdomäne - Common Security Domain - CSD setzen zwei Profilcontainer ISD-P, ISD-P 2 auf. Unabhängig von den Profilcontainer ISD-P, ISD-P 2 ist im eUICC ein MNO-unabhängiges Applet, Applet X, installiert. Die Profilcontainer ISD-P, ISD-P 2 lassen sich über die RSP Architektur verwalten, beispielsweise über die Kanäle vom ISD-P zum SM-DP+, oder über den Kanal vom LPAd zum ISD-R. Das Applet und das dem MNO gehörige Applet lassen sich über die RSP Architektur verwalten. Das vom MNO unabhängige Applet X lässt sich NICHT über die RSP Architektur verwalten, sondern erfordert einen eigenen OTA-Server (OTA = over the air).

Das Dokument EP 3 484 198 A1 aus dem Stand der Technik offenbart ein eUICC mit Profil-SDs (Profil-Sicherheitsdomänen), und mit einer sogenannten neben den Profil-SDs angeordneten transversal security domain TSD. Ein Zugriff auf die transversal security domain TSD durch einen Subskriptionsserver SM-DP+ erfolgt durch ein Senden eines TSD-Identifiers an die gerade aktive Profil-SD.

Das Dokument US 2018 / 0 234 405 A1 aus dem Stand der Technik offenbart ein Teilnehmeridentitätsmodul zur Authentisierung eines mobilen Endgeräts gegenüber einem mobilen Netzwerk, umfassend mindestens einen Profilcontainer, der dazu eingerichtet ist, dass darin von einem Profilserver aus ein Profil geladen, installiert und verwaltet werden kann. Der Profilcontainer enthält auch eine im Profilcontainer angelegte Applikations-Sicherheitsdomäne, die dazu eingerichtet ist, dass darin von einem MNO TSM Server aus Applikationen geladen, installiert und verwaltet werden können.

Das Dokument DE102015008179A1 aus dem Stand der Technik offenbart ein Teilnehmeridentitätsmodul zur Authentisierung eines mobilen Endgeräts gegenüber einem mobilen Netzwerk, umfassend mindestens einen Profilcontainer, in dem eine MNO-Sicherheitsdomäne angelegt ist, unter der ein Applet angelegt ist (beispielsweise Fig. 1).

Im Dokument WO 2015 / 175 164 A1 wird eine Technik zur Verwaltung eines oder mehrerer elektronischer Teilnehmeridentitätsmodule (eSIMs) auf einer eingebetteten UICC (eUICC) beschrieben. Diese Technik beinhaltet die Nutzung der GlobalPlatform^{™} Spezifikation und/oder anderer Telekommunikationsstandards zur Unterstützung der eSIMs auf der eUICC. Jede eUICC kann eine Issuer Security Domain (ISD) enthalten, die einem Gerätehersteller gehört, sowie einen eSIM-Manager, der die Vielzahl der eSIMs auf der eUICC verwaltet. Insbesondere können Binärdateien von einer oder mehrerer Anwendungen, die von verschiedenen eSIMs gemeinsam genutzt werden, standardisiert und so gespeichert werden, dass jedes eSIM in der Lage ist, die eine oder mehreren Anwendungen (über die eSIM) zu nutzen. oder mehrere Anwendungen (über den eSIM-Manager) zu nutzen, ohne die Binärdateien einzeln speichern zu müssen.

### Zusammenfassung der Erfindung

Der Erfindung liegt die Aufgabe zu Grunde, ein Teilnehmeridentitätsmodul zu schaffen, in dem Drittanbieter-Applets unabhängig von einem speziellen Netzbetreiber MNO auf effiziente Weise installiert und verwaltet werden können.

Die Aufgabe wird gelöst durch ein Teilnehmeridentitätsmodul nach Anspruch 1 und einen Profilserver SM-DP+ nach Anspruch 8.

Vorteilhafte Ausgestaltungen der Erfindung sind in den abhängigen Ansprüchen angegeben.

Das erfindungsgemäße Teilnehmeridentitätsmodul nach Anspruch 1 ist zur Authentisierung eines mobilen Endgeräts gegenüber einem mobilen Netzwerk eingerichtet. Das Teilnehmeridentitätsmodul umfasst mindestens einen Profilcontainer, der dazu eingerichtet ist, dass darin von einem Profilserver aus ein Profil geladen, installiert und verwaltet werden kann. Das Teilnehmeridentitätsmodul ist gekennzeichnet durch mindestens eine im Profilcontainer angelegte Applikations-Sicherheitsdomäne, die dazu eingerichtet ist, dass darin von demselben Profilserver aus Applikationen geladen, installiert und verwaltet werden können. In der Applikations-Sicherheitsdomäne ist eine Applikation installiert. Die Applikation ist dazu eingerichtet, einen Dienst anzubieten, der von einer Authentisierung gegenüber dem Mobilfunknetz unterschiedlich ist.

Die Applikations-Sicherheitsdomäne ist wie der Name sagt eine Sicherheitsdomäne, welche somit gesicherte Kommunikation erlaubt, die gesichert ist z.B. durch Verschlüsselung der Kommunikationsinhalte oder /und durch Authentisierung zwischen der Applikations-Sicherheitsdomäne und dem Kommunikationspartner zu Beginn der Kommunikation. Die Kommunikation kann dabei insbesondere zwischen der Applikations-Sicherheitsdomäne und einem Drittanbieter von Applets als Kommunikationspartner erfolgen. Die Möglichkeit der Sicherung der Kommunikation impliziert insbesondere die Möglichkeit, unerwünschte mögliche Kommunikationspartner auszuschließen, auch den Profilcontainer und damit den speziellen Netzbetreiber MNO, unter dessen Verwaltung der Profilcontainer verwaltet wird. Kommunikationsinhalte können Applets des Drittanbieters sein und Installationsbefehle, um die Applets zu laden und zu installieren. Damit ist ein Teilnehmeridentitätsmodul geschaffen, in dem Drittanbieter-Applets unabhängig von einem speziellen Netzbetreiber MNO geladen, installiert und verwaltet werden können.

Im Unterschied zur Lösung aus EP 3 484 198 A1, wo im eUICC eine von den Profil-SDs (Profil-Sicherheitsdomänen) von vornherein unabhängige transversal security domain TSD vorgesehen ist, ist die erfindungsgemäße Applikations-Sicherheitsdomäne innerhalb eines Profilcontainers angelegt. Damit kann die Kommunikation eines Drittanbieters mit der Applikations-Sicherheitsdomäne über die Infrastruktur zur Provisionierung des Profilcontainers mit Profilen und Applets erfolgen, insbesondere vom selben Profilserver der den Profilcontainer mit Profilen und Verwaltungsanweisungen für Profile versorgt. Daher ist die erfindungsgemäße Architektur besonders effizient. Um Vertraulichkeit der Kommunikation zwischen der Applikations-Sicherheitsdomäne und dem Kommunikationspartner (z.B. Drittanbieter von Applets) zu gewährleisten, wird die Kommunikation gesichert, beispielsweise durch Authentisierung und/oder Verschlüsselung.

Daher ist gemäß Anspruch 1 ein Teilnehmeridentitätsmodul geschaffen, in dem Drittanbieter-Applets unabhängig von einem speziellen Netzbetreiber MNO auf effiziente Weise installiert und verwaltet werden können.

In der erfindungsgemäßen Applikations-Sicherheitsdomäne kann weiter selbst eine oder mehrere untergeordnete Sub-Applikations-Sicherheitsdomäne(n) enthalten, die dazu eingerichtet ist (sind), dass darin von demselben Profilserver aus Applikationen installiert und verwaltet werden können. In Sub-Applikations-Sicherheitsdomänen können wiederum enthalten Sub-Sub-Applikations-Sicherheitsdomänen etc., so dass eine Hierarchie-Struktur von Applikations-Sicherheitsdomänen vorgesehen werden kann.

Das Verwaltung einer Applikation kann wahlweise umfassen: Aktualisieren der Applikation, Bewirken einer Statusänderung an der Applikation, wie beispielsweise Aktivieren der Applikation oder Deaktivieren der Applikation oder Personalisieren der Applikation.

Vorzugsweise ist die Applikations-Sicherheitsdomäne dazu eingerichtet, dass darin, von dem Profilserver aus, die Applikationen unabhängig vom Verwalter des Profilcontainers geladen, installiert und verwaltet werden können. Mit anderen Worten kann im Profilcontainer von dem Profilserver aus durch einen Profilverwalter ein Profil geladen, installiert und verwaltet werden. Ebenfalls vom Profilserver aus, aber durch einen Applikationsverwalter, der vom Profilverwalter unterschiedlich ist, können in der Applikations-Sicherheitsdomäne Applikationen geladen, installiert und verwaltet werden.

Wahlweise wird die Unabhängigkeit des Applikationsverwalters vom Profilverwalter durch Sicherung der Kommunikation zwischen der Applikations-Sicherheitsdomäne und dem Profilserver erreicht, insbesondere durch Authentisierung und/oder Verschlüsselung.

Wahlweise ist das Teilnehmeridentitätsmodul weiter dazu eingerichtet, dass beim Laden, Installieren und Verwalten von Profilen und Applikationen Schlüssel verwendet werden, wobei beim Laden, Installieren und Verwalten von Profilen in Profilcontainer andere Schlüssel verwendet werden als zum Laden, Installieren und Verwalten von Applikationen in die in den Profilcontainern enthaltenen Applikations-Sicherheitsdomänen und ggf. Sub-Applikations-Sicherheitsdomänen.

Als Schlüssel zum Laden, Installieren und Verwalten sind wahlweise Schlüssel gemäß GSMA SGP.22 Common Mutual Authentication vorgesehen, so dass beim Laden, Installieren und Verwalten von Profilen und Applikationen die gemäß GSMA SGP.22 Common Mutual Authentication vorgesehene Prozedur zur Authentisierung und Schlüsselableitung durchgeführt werden kann.

Generell können als Schlüssel symmetrische oder asymmetrische Schlüssel vorgesehen sein.

Wahlweise ist im Teilnehmeridentitätsmodul in dem Profilcontainer ein Profil installiert. In der Applikations-Sicherheitsdomäne ist eine Applikation installiert, oder wahlweise sind dort mehrere Applikationen installiert.

Die Applikation ist dazu eingerichtet, einen Dienst anzubieten, der von einer Authentisierung gegenüber dem Mobilfunknetz unterschiedlich ist. Wahlweise ist der Dienst ein Zahlungsverkehrs-Transaktions-Dienst zur Durchführung von elektronischen Geldzahlungen, oder ein Ticketing-Dienst zur Verwaltung von elektronischen Fahrscheinen (Fahrschein-Tickets) oder elektronischen Eintrittskarten (Eintritts-Tickets), oder dergleichen. Wahlweise sind im Teilnehmeridentitätsmodul in der Applikations-Sicherheitsdomäne installationsfähige oder installierte Applikationen als Applets gestaltet, insbesondere als Java Applets nach dem Java Card Standard.

Ein erfindungsgemäßer Profilserver SM-DP+ ist dazu eingerichtet
- Profile in Profilcontainer von Teilnehmeridentitätsmodulen zu laden, um sie dort zu installieren, und sie zu verwalten, und
- Applikationen in in den Profilcontainern enthaltene Applikations-Sicherheitsdomänen, und optional in in den Applikations-Sicherheitsdomänen enthaltene Sub-Applikations-Sicherheitsdomänen, zu laden, um sie dort zu installieren, und sie zu verwalten.

Der Profilserver ist wahlweise weiter dazu eingerichtet, dass beim Laden von Profilen und Applikationen Schlüssel verwendet werden, wobei beim Laden, Installieren und Verwalten von Profilen in Profilcontainer andere Schlüssel verwendet werden als zum Laden, Installieren und Verwalten von Applikationen in die in den Profilcontainern enthaltenen Applikations-Sicherheitsdomänen und ggf. Sub-Applikations-Sicherheitsdomänen.

### Kurze Beschreibung der Zeichnungen

Im Folgenden wird die Erfindung an Hand von Ausführungsbeispielen und unter Bezugnahme auf die Zeichnung näher erläutert, in der zeigen:
Fig. 1 eine eUICC Architektur nach SGP.21 mit der Möglichkeit, Applets im eUICC vorzusehen, mit Applets direkt im Profilcontainer;
Fig. 2 eine eUICC Architektur nach dem in der GSMA diskutierten alternativen Vorschlag zur Unterbringung von Applets im eUICC, mit einer Applet-Sicherheitsdomäne neben Profilcontainern;
Fig. 3 eine eUICC Architektur gemäß einer Ausführungsform der Erfindung, mit einer Applet-Sicherheitsdomäne im Profilcontainer.

### Detaillierte Beschreibung von Ausführungsbeispielen

Fig. 1 zeigt eine eUICC Architektur nach SGP.21 mit der Möglichkeit, Applets im eUICC vorzusehen, mit Applets direkt im Profilcontainer, wobei der Profilverwalter zugleich auch Appletverwalter ist.

Fig. 2 zeigt eine eUICC Architektur nach dem in der GSMA diskutierten alternativen Vorschlag zur Unterbringung von Applets im eUICC, mit einer Applet-Sicherheitsdomäne neben Profilcontainern, wobei zur Verwaltung der Applet-Sicherheitsdomäne ein anderer Server erforderlich ist als zur Verwaltung der Profilcontainer.

Fig. 3 zeigt eine eUICC Architektur gemäß einer Ausführungsform der Erfindung, mit einer Applet-Sicherheitsdomäne, als erfindungsgemäße Applikations-Sicherheitsdomäne ACSD, im Profilcontainer. Genauer zeigt Fig. 3 ein eUICC mit einem Betriebssystem OS, einem Profile Package Interpreter, einem ersten Profilcontainer ISD-P und eine zweiten Profilcontainer ISD-P 2, sowie einem Root-Container ISD-R und einer optionalen gemeinsamen Applikations-Sicherheitsdomäne CSD ähnlich der in Fig. 2 gezeigten CSD. Im ersten Profilcontainer ISD-P ist eine Applet-Sicherheitsdomäne ACSD vorgesehen, sowie eine MNO-Sicherheitsdomäne MNO SD. In der Applet-Sicherheitsdomäne ACSD ist ein Applet X installiert, das unter Verwaltung eines Appletverwalters steht (der Übersichtlichkeit halber ist Applet X unter der Applet-Sicherheitsdomäne ACSD gezeigt). In der MNO-Sicherheitsdomäne MNO SD sind ein Applet und ein MNO Applet installiert, die unter Verwaltung eines Mobilfunknetzbetreibers MNO stehen. Der zweite Profilcontainer ISD-P 2 weist eine noch inaktive Applet-Sicherheitsdomäne ACSD auf, in der noch keine Applets installiert sind. Weiter weist der zweite Profilcontainer ISD-P 2 eine MNO-Sicherheitsdomäne MNO SD mit einem Applet und einem MNO Applet auf, ähnlich wie die erste Sicherheitsdomäne ISD-P. Die Applet-Sicherheitsdomänen ACSD im ersten und zweiten Profilcontainer ISD-P, ISD-P 2, und das in der Applet-Sicherheitsdomänen ACSD im ersten Profilcontainer ISD-P installierte Applet X, können durch den jeweiligen Appletverwalter vom Profilserver SM-DP+ aus adressiert werden (geladen, installiert, verwaltet, ...). Durch Authentisierung und Verschlüsselung ist die Kommunikation des Appletverwalters mit seiner Applet-Sicherheitsdomäne ACSD vor dem Mobilfunknetzbetreiber MNO, der den Profilserver betreibt, vertraulich gehalten.

## Patentansprüche

1. Teilnehmeridentitätsmodul (eUICC) zur Authentisierung eines mobilen Endgeräts gegenüber einem mobilen Netzwerk,
- umfassend mindestens einen Profilcontainer (ISD-P), der dazu eingerichtet ist, dass darin von einem Profilserver SM-DP+ aus ein Profil geladen, installiert und verwaltet werden kann;
- eine im Profilcontainer (ISD-P) angelegte Mobilfunknetzbetreiber-Sicherheitsdomäne (MNO-SD), in der eine Mobilfunknetzbetreiber-Applikation installiert ist,
- mindestens eine im Profilcontainer (ISD-P) angelegte Applikations-Sicherheitsdomäne (ACSD), die dazu eingerichtet ist, dass darin von demselben Profilserver SM-DP+ aus Applikationen geladen, installiert und verwaltet werden können,
- wobei in der Applikations-Sicherheitsdomäne (ACSD) eine Applikation installiert ist, und
- wobei die Applikation eingerichtet ist, einen Dienst anzubieten, der von einer Authentisierung gegenüber dem Mobilfunknetz unterschiedlich ist.

2. Teilnehmeridentitätsmodul (eUICC) Anspruch 1, wobei in der Applikations-Sicherheitsdomäne (ACSD) mindestens eine Sub-Applikations-Sicherheitsdomäne angelegt ist, die dazu eingerichtet ist, dass darin von demselben Profilserver SM-DP+ aus Applikationen geladen, installiert und verwaltet werden können.

3. Teilnehmeridentitätsmodul (eUICC) nach Anspruch 1 oder 2, dazu eingerichtet, dass beim Laden, Installieren und Verwalten von Profilen und Applikationen Schlüssel verwendet werden, wobei beim Laden, Installieren und Verwalten von Profilen in Profilcontainer (ISD-P) andere Schlüssel verwendet werden als zum Laden, Installieren und Verwalten von Applikationen in die in den Profilcontainern (ISD-P) enthaltenen Applikations-Sicherheitsdomänen (ACSDs) und ggf. Sub-Applikations-Sicherheitsdomänen.

4. Teilnehmeridentitätsmodul (eUICC) nach Anspruch 3, wobei als Schlüssel Schlüssel gemäß GSMA SGP.22 Common Mutual Authentication vorgesehen sind.

5. Teilnehmeridentitätsmodul (eUICC) nach einem der Ansprüche 1 bis 4, wobei in dem Profilcontainer ein Profil installiert ist.

6. Teilnehmeridentitätsmodul (eUICC) nach einem der Ansprüche 1 bis 5, wobei der Dienst ein Zahlungsverkehrs-Transaktions-Dienst zur Durchführung von elektronischen Geldzahlungen oder ein Ticketing-Dienst zur Verwaltung von elektronischen Fahrscheinen oder elektronischen Eintrittskarten ist.

7. Teilnehmeridentitätsmodul (eUICC) nach einem der Ansprüche 1 bis 6, wobei die Applikations-Sicherheitsdomäne dazu eingerichtet ist, dass darin, von dem Profilserver SM-DP+ aus, die Applikationen unabhängig vom Verwalter des Profilcontainers geladen, installiert und verwaltet werden können.

8. Profilserver SM-DP+, dazu eingerichtet
- Profile in Profilcontainer (ISD-P) von Teilnehmeridentitätsmodulen (eUICCs) zu laden, um sie dort zu installieren, und zu verwalten, wobei im Profilcontainer (ISD-P) eine Mobilfunknetzbetreiber-Sicherheitsdomäne (MNO-SD) angelegt ist, in der eine Mobilfunknetzbetreiber-Applikation installiert ist, und
- Applikationen in in den Profilcontainern (ISD-Ps) enthaltene Applikations-Sicherheitsdomänen (ACSDs), und optional in in den Applikations-Sicherheitsdomänen (ACSDs) enthaltene Sub-Applikations-Sicherheitsdomänen, zu laden, um sie dort zu installieren, und zu verwalten,
- wobei in der Applikations-Sicherheitsdomäne (ACSD) eine Applikation installiert ist, und
- wobei die Applikation eingerichtet ist, einen Dienst anzubieten, der von einer Authentisierung gegenüber dem Mobilfunknetz unterschiedlich ist.

9. Profilserver SM-DP+ nach Anspruch 8, dazu eingerichtet, dass beim Laden von Profilen und Applikationen Schlüssel verwendet werden, wobei beim Laden, Installieren und Verwalten von Profilen in Profilcontainer (ISD-P) andere Schlüssel verwendet werden als zum Laden, Installieren und Verwalten von Applikationen in die in den Profilcontainern (ISD-Ps) enthaltenen Applikations-Sicherheitsdomänen (ACSDs) und ggf. Sub-Applikations-Sicherheitsdomänen.

10. Profilserver SM-DP+ nach Anspruch 8 oder 9, wobei als Schlüssel Schlüssel gemäß GSMA SGP.22 Common Mutual Authentication vorgesehen sind.

11. System umfassend ein Teilnehmeridentitätsmodul (eUICC) nach einem der Ansprüche 1 bis 7 und einen Profilserver SM-DP+ nach einem der Ansprüche 8 bis 10.

## Claims

1. Subscriber Identity Module (eUICC) for authentication of a mobile terminal device against a mobile network,
- comprising at least one profile container (ISD-P) which is configured to allow a profile to be loaded, installed and managed therein by a profile server SM-DP+;
- a mobile network operator security domain (MNO-SD), created in the profile container (ISD-P), in which a mobile network operator application is installed,
- at least one application security domain (ACSD), created in the profile container (ISD-P), which is configured to allow applications to be loaded, installed and managed by the same profile server SM-DP+,
- wherein an application is installed in the application security domain (ACSD), and
- wherein the application is configured to offer a service that is different from authentication to the mobile network.

2. The subscriber identity module (eUICC) according to claim 1, wherein, in the application security domain (ACSD), at least one sub-application security domain is created, which is configured to allow applications to be loaded, installed and managed therein by the same profile server SM-DP+.

3. The subscriber identity module (eUICC) according to claim 1 or 2, configured to use keys with the loading, installing and managing profiles and applications, wherein different keys are used with the loading, installing and managing profiles in profile containers (ISD-P) than for loading, installing and managing applications in the application security domains (ACSDs), contained in the profile containers (ISD-P), and possibly sub-application security domains.

4. The subscriber identity module (eUICC) according to claim 3, wherein as keys, keys in accordance with GSMA SGP.22, Common Mutual Authentication are provided.

5. The subscriber identity module (eUICC) according to any one of claims 1 to 4, wherein a profile is installed in the profile container.

6. The subscriber identity module (eUICC) according to any one of claims 1 to 5, wherein the service is a payment transaction service for carrying out electronic money payments or a ticketing service for managing electronic traffic tickets or electronic admission tickets.

7. The subscriber identity module (eUICC) according to any one of claims 1 to 6, wherein the application security domain is configured such that the applications can be loaded, installed and managed therein by the profile server SM-DP+ independently of the manager of the profile container.

8. Profile server SM-DP+, configured
- to load profiles into profile containers (ISD-P) of subscriber identity modules (eUICCs) in order to install and manage them therein, wherein a mobile network operator security domain (MNO-SD) is created in the profile container (ISD-P) in which a mobile network operator application is installed, and
- to load applications into application security domains (ACSDs) contained in the profile containers (ISD-P), and optionally into sub-application security domains contained in the application security domains (ACSDs), to install them there, and to manage;
- wherein the application is installed in the application security domain (ACSD), and
- wherein the application is configured to offer a service that is different from an authentication to the mobile network.

9. The profile server SM-DP+ according to claim 8, configured to use keys when loading profiles and applications, wherein, when loading, installing and managing profiles in profile containers (ISD-P), different keys are used than for loading, installing and managing applications in the application security domains (ACSDs) contained in the profile containers (ISD-Ps) and possibly sub-application security domains.

10. The profile server SM-DP+ according to claim 8 or 9, wherein as keys, keys in accordance with GSMA SGP.22, Common Mutual Authentication are provided.

11. System, comprising a subscriber identity module (eUICC) according to any one of claims 1 to 7 and a profile server SM-DP+ according to any one of claims 8 to 10.

## Revendications

1. Module d'identité de l'abonné (eUICC) pour l'authentification d'un terminal mobile sur un réseau mobile,
- comprenant au moins un conteneur de profil (ISD-P) qui est configuré de telle sorte qu'un profil peut être chargé, installé et géré dans celui-ci à partir d'un serveur de profils SM-DP+ ;
- un domaine de sécurité d'opérateur de réseau mobile (MNO-SD) appliqué dans le conteneur de profil (ISD-P), dans lequel une application d'opérateur de réseau mobile est installée,
- au moins un domaine de sécurité d'applications (ACSD) appliqué dans le conteneur de profil (ISD-P), qui est configuré de telle sorte que des applications peuvent être chargées, installées et gérées dans celui-ci à partir du même serveur de profils SM-DP+,
- dans lequel une application est installée dans le domaine de sécurité d'applications (ACSD), et
- dans lequel l'application est configurée pour fournir un service qui est différent d'une authentification sur le réseau mobile.

2. Module d'identité de l'abonné (eUICC) selon la revendication 1, dans lequel dans le domaine de sécurité d'applications (ACSD) est appliqué au moins un domaine de sécurité d'applications secondaires qui est configuré de telle sorte que des applications peuvent être chargées, installées et gérées dans celui-ci à partir du même serveur de profils SM-DP+.

3. Module d'identité de l'abonné (eUICC) selon la revendication 1 ou 2, configuré de telle sorte que des clés sont utilisées lors du chargement, de l'installation et de la gestion de profils et d'applications, dans lequel lors du chargement, de l'installation et de la gestion de profils dans des conteneurs de profils (ISD-P), les clés utilisées sont différentes de celles utilisées pour le chargement, l'installation et la gestion d'applications dans les domaines de sécurité d'applications (ACSD) contenus dans les conteneurs de profils (ISD-P), et éventuellement dans les domaines de sécurité d'applications secondaires.

4. Module d'identité de l'abonné (eUICC) selon la revendication 3, dans lequel des clés conformes à la norme d'authentification mutuelle commune GSMA SGP.22 sont prévues en tant que clés.

5. Module d'identité de l'abonné (eUICC) selon l'une des revendications 1 à 4, dans lequel un profil est installé dans le conteneur de profil.

6. Module d'identité de l'abonné (eUICC) selon l'une des revendications 1 à 5, dans lequel le service est un service de transaction de paiements pour effectuer des paiements en monnaie électroniques ou un service de billetterie pour gérer des titres de transport électroniques ou des billets d'entrée électroniques.

7. Module d'identité de l'abonné (eUICC) selon l'une des revendications 1 à 6, dans lequel le domaine de sécurité d'applications est configuré de telle sorte que les applications peuvent être chargées, installées et gérées à partir du serveur de profils SM-DP+, indépendamment du gestionnaire du conteneur de profil.

8. Serveur de profils SM-DP+, configuré pour :
- charger et gérer des profils dans des conteneurs de profils (ISD-P) de modules d'identité de l'abonné (eUICC) afin de les y installer, dans lequel dans le conteneur de profils (ISD-P) est appliqué un domaine de sécurité d'opérateur de réseau mobile (MNO-SD) dans lequel une application d'opérateur de réseau mobile est installée, et
- charger et gérer des applications dans des domaines de sécurité d'applications (ACSD) contenus dans les conteneurs de profils (ISD-PS), et facultativement dans des domaines de sécurité d'applications secondaires contenus dans les domaines de sécurité d'applications (ACSD) afin de les y installer,
- dans lequel une application est installée dans le domaine de sécurité d'applications (ACSD), et
- dans lequel l'application est configurée pour fournir un service qui est différent d'une authentification sur le réseau mobile.

9. Serveur de profils SM-DP+ selon la revendication 8, configuré de telle sorte que des clés sont utilisées lors du chargement, de l'installation et de la gestion de profils et d'applications, dans lequel lors du chargement, de l'installation et de la gestion de profils dans des conteneurs de profils (ISD-P), les clés utilisées sont différentes de celles utilisées pour le chargement, l'installation et la gestion d'applications dans les domaines de sécurité d'application (ACSD) contenus dans les conteneurs de profils (ISD-P), et éventuellement dans les domaines de sécurité d'applications secondaires.

10. Serveur de profils SM-DP+ selon la revendication 8 ou 9, dans lequel des clés conformes à la norme d'authentification mutuelle commune GSMA SGP.22 sont prévues en tant que clés.

11. Système comprenant un module d'identité de l'abonné (eUICC) selon l'une des revendications 1 à 7 et un serveur de profils SM-DP+ selon l'une des revendications 8 à 10.
